# EUROPÄISCHE PATENTSCHRIFT

(11) **EP 1 214 463 B1**
(45) Veröffentlichungstag und Bekanntmachung des Hinweises auf die Patenterteilung: **06.04.2005**
(21) Anmeldenummer: 00951090.0
(22) Anmeldetag: 08.08.2000
(51) Int. Cl.: D01F 2/00, D01F 1/04, C08J 5/18, C08L 1/02, C08K 3/00

(54) **GEFÄRBTE CELLULOSISCHE FORMKÖRPER**
COLORED CELLULOSIC SHAPED BODIES
CORPS MOULES CELLULOSIQUES COLORES

(30) Priorität: 10.08.1999 AT 137699
(43) Veröffentlichungstag der Anmeldung: 19.06.2002
(73) Patentinhaber: LENZING AKTIENGESELLSCHAFT, 4860 Lenzing (AT)
(72) Erfinder: RÜF, Hartmut, A-4840 Vöcklabruck (AT)
(74) Vertreter: Schwarz, Albin, Dr.
(86) Internationale Anmeldenummer: PCT/AT2000/000216
(87) Internationale Veröffentlichungsnummer: WO 2001/011121

(56) Entgegenhaltungen:
- WO-A-96/27035
- WO-A-96/27638
- WO-A-98/58015

## Beschreibung

Die vorliegende Erfindung betrifft neue gefärbte cellulosische Formkörper und ein Verfahren zur Herstellung dieser Formkörper.

Der Begriff "Formkörper" soll für die Zwecke der vorliegenden Beschreibung und Patentansprüche insbesondere Fasern und Folien bedeuten. Wenn im folgenden "Fasern" genannt werden, so sind damit Fasern, Folien und auch andere Formkörper gemeint.

Synthesefasern wie Polyamid und Polyester sowie Viskosefasern werden heute routinemäßig spinnmassengefärbt. Zur Spinnfärbung werden ausschließlich Pigmente eingesetzt, die meist in Form von Granulatmarken oder Teigwaren in den Handel kommen.

Im allgemeinen werden Pigmente in der Polymerschmelze oder -masse dispergiert. Bei der Viskosespinnfärbung werden die Pigmentpräparationen entweder portionsweise oder zur Hauptviskoseleitung zudosiert.

Die Vorteile einer Spinnfärbung sind unter anderem:
- Es können große Chargen mit gleichem Farbton erzielt werden.
- Die Färbung weist hohe Naßechtheiten auf.
- Der herkömmliche Färbeprozeß entfällt, dadurch ergibt sich eine Energieeinsparung, eine Rohstoffeinsparung (Chemikalien, Wasser) und eine geringere Abwasserbelastung.
- Es tritt kein Farbstoffverlust auf.
- Die Spleißproblematik beim Färben (Streifigkeit) entfällt.
- Es wird eine homogene Farbstoffverteilung in der Faser und damit eine gleichmäßige Durchfärbung erzielt.
- Bei einer Spinndosierung sind schnelle Farbtonwechsel möglich.

Als Alternative zum Viskoseverfahren wurden in den letzten Jahren eine Reihe von Verfahren beschrieben, bei denen Cellulose ohne Bildung eines Derivats in einem organischen Lösungsmittel, einer Kombination eines organischen Lösungsmittels mit einem organischen Salz oder in wässrigen Salzlösungen gelöst wird. Cellulosefasern, die aus solchen Lösungen hergestellt werden, erhielten von der BISFA (The International Bureau for the Standardisation of man made Fibres) den Gattungsnamen Lyocell. Als Lyocell wird von der BISFA eine Cellulosefaser definiert, die durch ein Spinnverfahren aus einem organischen Lösungsmittel erhalten wird. Unter "organischem Lösungsmittel" wird von der BISFA ein Gemisch aus einer organischen Chemikalie und Wasser verstanden.

Ein bekanntes Verfahren zur Herstellung von Lyocell-Fasern ist das sogenannte Aminoxidverfahren. Dabei wird aus einer Suspension von Cellulose in einem wässrigen tertiären Aminoxid, vorzugsweise N-Methylmorpholin-N-oxid (NMMO), durch Abdampfen von überschüssigem Wasser eine Lösung von Cellulose gebildet, welche durch eine Spinndüse extrudiert wird. Die gebildeten Filamente werden über einen Luftspalt in ein Fällbad geführt, gewaschen und getrocknet. Ein solches Verfahren ist z.B. in der US-A - 4 246 221 beschrieben.

Aufgrund der prinzipiellen Vorteile einer Spinnfärbung ist auch die Entwicklung von Spinnfärbeverfahren für Lyocell-Fasern versucht worden. Dabei hat sich gezeigt, daß die Verwirklichung einer Spinnfärbung im Aminoxidverfahren mit mehreren Problemen behaftet ist.

So kann es aufgrund der Kreislaufführung im Aminoxidverfahren zur Anreicherung von Pigmenten, Farbstoffen und Additiven (z.B. aus Pigmentpräparationen) kommen. Auch ergibt sich aufgrund der thermischen Instabilität der Cellulose-Aminoxid-Lösungen eine sehr enge Farbmittelauswahl. Ferner müssen durch agglomerierte Pigmentteilchen auftretende Spinnprobleme berücksichtigt werden.

Das österreichische Gebrauchsmuster AT-GM - 002 207 U1 lehrt, daß für eine Spinnfärbung von Lyocellfasern geeignete Farbmittel in der Celluloselösung zu mehr als 95 Masse%, bezogen auf ursprünglich eingesetztes Farbmittel bzw. Farbmittelvorstufe unlöslich sein müssen und metallhaltige Farbmittel der Suspension vor der Lösungsherstellung nicht zugegeben werden sollten, jedoch durchaus, sofern eine ausreichende Unlöslichkeit gegeben ist, der Spinnlösung zugegeben werden können.

In der Tabelle 1 der AT-GM - 002 207 U1 ist als unlösliches Pigment das Farbmittel Sandorin Blue 2 GLS20 genannt. Dieses Farbmittel enthält das Schwermetall Kupfer.

Untersuchungen der Erfinder der vorliegenden Erfindung haben ergeben, daß solche Pigmente trotz an sich ausreichender Unlöslichkeit für den Einsatz im Aminoxid aufgrund der Herabsetzung der thermischen Stabilität der Celluloselösung nicht geeignet sind. Es besteht aber das Bedürfnis, zur Spinnfärbung im Aminoxidverfahren Farbmittel aus dem großen Bereich der schwermetallhältigen Farbmittel verwenden zu können.

Klassische anorganische Pigmente im Gelb- und Orangebereich, die ökologisch bedenklich sind, sind Cadmiumsulfid und Bleichromat. Andere Pigmente sind ökologisch unbedenklich, wie z.B. die natürlichen und synthetischen Eisenoxide, die im Farbbereich Gelb/Rot/Braun bis Schwarz in großem Umfang eingesetzt werden. Es ist jedoch bekannt, daß Eisen in drastischer Weise die Thermostabilität von Cellulose-Aminoxid-Lösungen verringert.

Es ist bekannt, Titandioxid in Cellulosefasern einzusetzen. Titandioxid wird bei Cellulosefasern jedoch im Gegensatz etwa zur Verwendung bei Farben und Lacken in der Anstrichindustrie nicht als Farbmittel (Weißpigment), sondern zur Mattierung, d.h. zur Verminderung von Glanz, eingesetzt. Eine solche Verwendung von Titandioxid beim Aminoxid-Verfahren wird in der WO-A - 96/27638 beschrieben.

In der WO-A-98/58015 ist die Verwendung von Titandioxid und Antimonpentoxid als Pigment im Aminoxidverfahren beschrieben.

Die vorliegende Erfindung stellt sich die Aufgabe, gefärbte cellulosische Formkörper, insbesondere in den Farbbereichen Gelb, Orange, Rot und Braun zur Verfügung zu stellen, die durch Spinnfärbung mit schwermetallhältigen Farbmitteln nach dem Aminoxidverfahren hergestellt werden können.

Diese Aufgabe wird erfindungsgemäß dadurch gelöst, daß zur Spinnfärbung ein Farbmittel auf Basis von Titanoxid oder Spinell (MgAl₂O₄), wobei das Titan teilweise bzw. das Magnesium teilweise oder ganz durch ein oder mehrere Schwermetall(e) ersetzt ist eingesetzt wird, welches gemäß dem unten beschriebenen Themostabilitätstest die Anstiegstemperatur der Formmasse bzw. Spinnmasse, d.h. der Lösung von Cellulose in dem tertiären Aminoxid, um maximal 10 °C, insbesondere um maximal 5 °C, herabsetzt. Es hat sich gezeigt, daß selbst schwermetallhältige Farbmittel im Aminoxidverfahren eingesetzt werden können, sofern sie dieses Kriterium erfüllen.

Die erfindungsgemäßen gefärbten cellulosischen Formkörper enthalten das schwermetallhältige Farbmittel vorzugsweise zu 0,20 bis 10 Masse%, insbesondere zu 2,0 bis 5,0 Masse%, bezogen auf die Cellulose.

Die Erfindung beruht auf der überraschenden Erkenntnis, daß bestimmte anorganische Buntpigmente aus der Gruppe der sogenannten "komplexen anorganischen Buntpigmente", die Schwermetalle enthalten, die Thermostabilität der Aminoxid-Cellulose-Lösung nicht beeinträchtigen und sich daher zum Einsatz im Aminoxid-Verfahren sehr gut eignen.

Insbesondere läßt sich mit solchen Farbmitteln das oben geschilderte Problem der Gelbtonfärbung lösen.

Aufgrund des bekannten Standes der Technik mußte eigentlich davon ausgegangen werden, daß alle Schwermetalle, deren Ionen zwei oder mehr Oxidationsstufen aufweisen, im Aminoxidverfahren einen negativen Einfluß auf die Thermostabilität des Systems ausüben. Da dieser Einfluß auf die Thermostabilität ein katalytischer ist und Katalyse - wie bekannt - durch sehr geringe Konzentrationen an katalytisch wirksamem Agens hervorgerufen werden kann, war die Verwendbarkeit einer Substanzklasse, die Schwermetalle enthält, als Farbmittel zur Spinnfärbung im Aminoxidverfahren völlig unerwartet.

Nach H. Endriß, "Aktuelle anorganische Bunt-Pigmente" (Curt R. Vincentz Verlag, Hannover, 1997) werden die komplexen anorganischen Buntpigmente in zwei Gruppen unterteilt:
- Rutil-Pigmente:
   Dies sind Titanoxide, bei denen Titan teilweise durch Schwermetalle ersetzt ist.
- Spinell-Pigmente:
   Darunter fallen zahlreiche Verbindungen des prinzipiellen Aufbaus A-B₂-O₄. Zahlreiche dieser Pigmente, wie z.B. solche vom Typ A-Fe₂-O₄, eignen sich nicht für das Aminoxidverfahren.

Es hat sich jedoch überraschenderweise gezeigt, daß Pigmente auf Basis von Spinell (MgAl₂O₄), in welchen das Mg teilweise oder aber auch ganz durch farbgebende Schwermetalle ersetzt ist, sich gut für das Aminoxidverfahren eignen. Das Wort "Spinell" bezeichnet hier und generell im Zusammenhang mit der vorliegenden Erfindung das durch die chemische Formel MgAl₂O₄ charakterisierte Mineral Spinell.

Das oder die Schwermetall(e) sind zweckmäßig aus der Gruppe bestehend aus Nickel, Chrom, Mangan, Antimon und Kobalt ausgewählt und liegen vorzugsweise in oxidischer Form vor.

Bei den mit Schwermetalloxiden dotierten Titanoxiden handelt es sich bevorzugt um sogenannte Rutil-Pigmente. Bei den Rutil-Pigmenten nimmt das Rutilgitter des Titandioxids Nickel(II)-oxid oder Chrom(III)-oxid oder Mangan(II)-oxid auf, und zwar als farbgebende Komponente, sowie beispielsweise Antimon(V)-oxid oder Niob(V)-oxid zum Wertigkeitsausgleich, so daß eine mittlere Wertigkeit von vier, wie beim Titan, erreicht wird (F. Hund, Angew. Chemie 74, 23 (1962)).

Bevorzugte Ausführungsformen der erfindungsgemäßen gefärbten cellulosischen Formkörper sind daher dadurch gekennzeichnet, daß sie ein Farbmittel auf Basis von Titanoxid enthalten, wobei das Titanoxid teilweise durch Nickel(II)-oxid, Chrom(III)-oxid oder Mangan(II)-oxid und durch Antimon(V)-oxid ersetzt ist.

Bei einer weiteren bevorzugten Ausführungsform enthalten die cellulosischen Formkörper ein Farbmittel auf Basis von Spinell (MgAl₂O₄), wobei das Magnesium teilweise oder ganz durch Kobalt ersetzt ist.

Die Metalloxide verlieren beim Einbau in das Wirtsgitter ihre ursprünglichen chemischen, physikalischen und physiologischen Eigenschaften. Nickeltitangelb ist ein zitronengelbes Pigment. Chromtitangelb variiert in der Farbe vom leichten bis mittleren Ocker, je nach Brenntemperatur und Teilchengröße. Nähere Informationen zu den erfindungsgemäß verwendeten Pigmenten sind in H. Endriß, "Aktuelle anorganische Bunt-Pigmente" (siehe oben) enthalten.

Geeignete Pigmente dieser Art sind im folgenden mit ihren Colour Indices beispielhaft angeführt. Solche Pigmente werden beispielsweise von der Firma BASF Aktiengesellschaft, Ludwigshafen, BRD unter den unten angeführten Handelsnamen hergestellt:

| Colour Index (CI) Pigment | Dotierung des Titandioxids | BASF-Handelsname |
|---|---|---|
| CI Pigment Yellow 53/77788 | Nickel/Antimon | Sicotan Gelb K 1011 |
| CI Pigment Yellow 24/77310 | Chrom/Antimon | Sicotan Gelb K 2001 FG |
| CI Pigment Yellow 24/77310 | Chrom/Antimon | Sicotan Gelb K 2011 |
| CI Pigment Yellow 24/77310 | Chrom/Antimon | Sicotan Gelb K 2107 |
| CI Pigment Yellow 24/77310 | Chrom/Antimon | Sicotan Gelb K 2112 |
| CI Pigment Yellow 164/77899 | Mangan/Antimon | Sicotan Braun K 2711 |

Die genannten Pigmente sind trotz hoher Schwermetallgehalte toxikologisch einwandfrei. Chrom/Nickel/Mangan/Antimon sind im Pigment nicht bioverfügbar. Die Pigmente sind daher auch zur Verwendung für Lebensmittelverpackungen zugelassen.

Der erfindungsgemäße gefärbte cellulosische Formkörper ist vorzugsweise eine Faser oder eine Folie und ist vorzugsweise nach einem Aminoxidverfahren hergestellt.

Die Erfindung betrifft auch ein Verfahren zur Herstellung der erfindungsgemäßen gefärbten cellulosischen Formkörper, bei dem eine Celluloselösung in einem wässerigen tertiären Aminoxid unter Verwendung eines Formwerkzeuges, insbesondere einer Spinndüse, geformt und über einen Luftspalt in ein Fällbad geführt wird, um die gelöste Cellulose auszufällen, wobei der Celluloselösung und/oder einem Vorläufer der Celluloselösung ein Farbmittel zugegeben wird, und ist dadurch gekennzeichnet, daß ein schwermetallhältiges Farbmittel auf Basis von Titanoxid oder Spinell (MgAl₂O₄), wobei das Titan teilweise bzw. das Magnesium teilweise oder ganz durch ein oder mehrere Schwermetall(e) ersetzt ist, zugegeben wird, welches gemäß dem unten beschriebenen Thermostabilitätstest die Anstiegstemperatur der Lösung von Cellulose in dem tertiären Aminoxid um maximal 10 °C, insbesondere um maximal 5 °C, herabsetzt.

Die Erfindung betrifft ferner die Verwendung eines schwermetallhältigen Farbmittels auf Basis von Titanoxid oder Spinell (MgAl₂O₄) , wobei das Titan teilweise bzw. das Magnesium teilweise oder ganz durch ein oder mehrere Schwermetall(e) ersetzt ist, welches gemäß dem unten beschriebenen Thermostabilitätstest die Anstiegstemperatur einer Lösung von Cellulose in einem tertiären Aminoxid um maximal 10 °C, insbesondere um maximal 5 °C, herabsetzt, als Farbmittel für cellulosische Formkörper.

Die vorliegende Erfindung wird im folgenden anhand von Beispielen noch näher erläutert.

### Beispiel 1

### Einfluß verschiedener erfindungsgemäß verwendeter Farbstoffe auf die Thermostabilität von NMMO-Spinnmassen

Untersuchte Farbstoffe:
A: CI Pigment Yellow 53/77788 (Sicotan Gelb K 1011)
B: CI Pigment Yellow 24/77310 (Sicotan Gelb K 2011),
C: CI Pigment Yellow 164/77899 (Sicotan Braun K 2711)
D: CI Pigment Blue 28/77346 (Sicopal Blau K 6310; Hersteller: BASF AG, Ludwigshafen, BRD); ein Spinellpigment auf Basis von MgAl₂O₄, in welchem Magnesium vollständig durch Kobalt ersetzt ist.

### Versuchsdurchführung (Thermostabilitätstest):

Die Versuche wurden mit einem Sikarex-Gerät (Sikarex TSC 512, Hersteller: System-Technik AG, Rüschlikon, Schweiz) durchgeführt. Dabei wird die NMMO-Spinnmasse am Sikarex mittels eines definierten Temperaturprogramms thermisch belastet, bis eine exotherme Reaktion (Zersetzung der Spinnmasse) eintritt.

11,5 g fein gemahlene Spinnmasse aus 13,5 Gew.-% Cellulose, 75 Gew.-% NMMO und 11,5 Gew.-% Wasser, die jeweils mit 5 Gew.-% Farbstoff A, B, C oder D, bezogen auf Cellulose, homogen versetzt war, wurde in den Glaseinsatz für das Sikarex-Druckgefäß eingewogen und am Sikarex einem isothermen Stufenexperiment unterzogen. Dabei wurde in der 1. Stufe mit einer Heizrate von 60 °C/h auf 90 °C aufgeheizt, gefolgt von einer Stabilisierungsphase, in der auf eine Heizrate von 6 °C/h umgestellt wurde. In weiterer Folge wurde mit dieser Heizrate in einer 2. Stufe auf 180 °C aufgeheizt. Die Temperatur der Spinnmasse im Sikarex wurde ebenfalls gemessen.

Zu Vergleichszwecken wurde auch eine NMMO-Spinnmasse E, die nicht mit Farbstoff versetzt war, unter den gleichen Bedingungen am Sikarex untersucht (Blindwert).

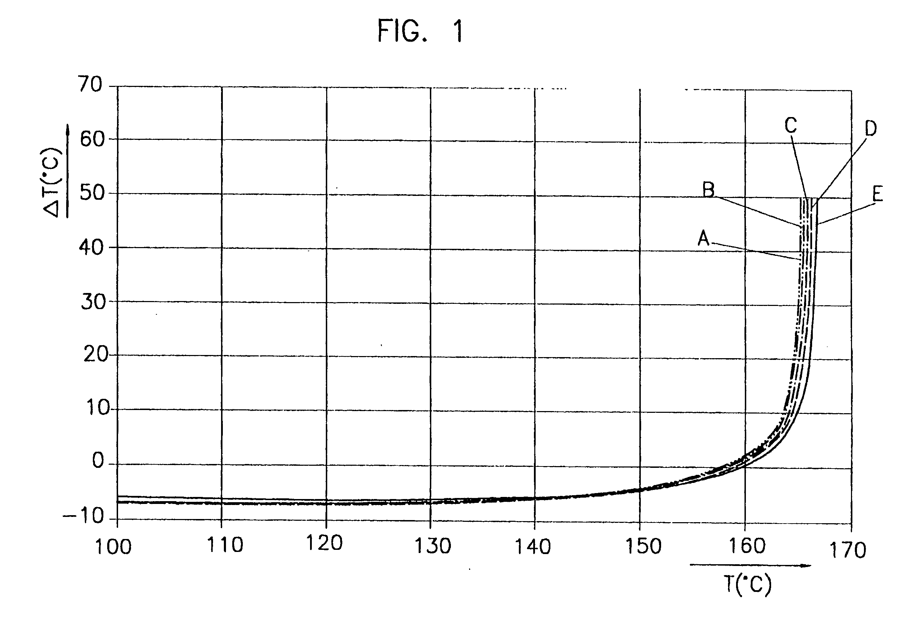

Die gemessenen Temperaturverläufe für die verschiedenen Spinnmassen A-E sind in Fig. 1 dargestellt, wobei auf der Abszisse die Temperatur T des Heizmantels in °C und auf der Ordinate die Temperaturdifferenz ΔT zwischen Probe und Heizmantel in °C aufgetragen sind.

Unter dem Begriff "Anstiegstemperatur" wird nun jene Temperatur des Heizmantels verstanden, bei der die Temperatur der Spinnmasse aufgrund exothermer Reaktionen um 10 °C höher als die Temperatur des Heizmantels liegt. Die Spinnmasse ohne Farbmittelzusatz (Kurve E) besitzt eine Anstiegstemperatur von etwa 165 °C. Der Zusatz der Farbmittel A, B, C und D setzte die Anstiegstemperatur der Spinnmasse nur um etwa 2 °C herab.

Die Ergebnisse zeigen, daß die Thermostabilität einer Cellulose-NMMO-Spinnmasse durch die Zugabe von jeweils 5% eines der erfindungsgemäß verwendeten Farbmittel nicht beeinflußt wird.

### Beispiel 2

Die Vorgangsweise entsprach jener von Beispiel 1, jedoch wurden anstelle der erfindungsgemäß verwendeten Farbstoffe folgende anderen schwermetallhaltigen Pigmente eingesetzt:
F: Wismutvanadat - CI Pigment Yellow 184 (Sicopal Gelb K 1160 FG)
G: Kupfer-Phthalocyanin - CI Pigment Blue 15:3 (Aquarinblue 3 G; Hersteller: Tennants Textile Colours Ltd.. Belfast, Nordirland)

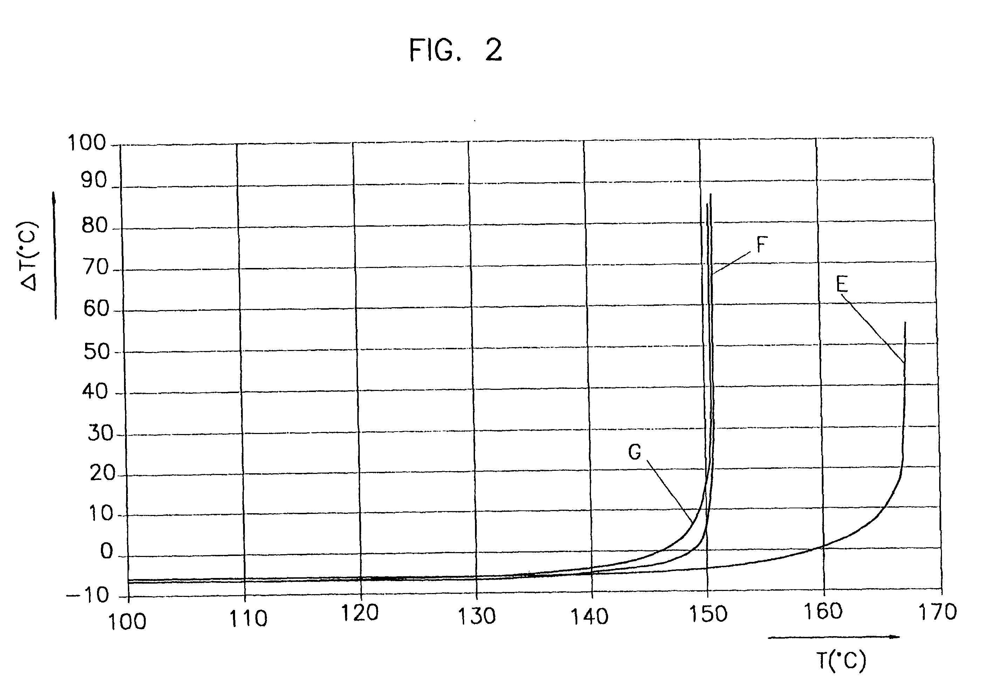

Die Ergebnisse sind in Fig. 2 dargestellt, wobei auf der Abszisse die Manteltemperatur T in °C und auf der Ordinate die Temperaturdifferenz ΔT zwischen Probe und Mantel in °C aufgetragen sind.

Aus Fig. 2 ist ersichtlich, daß die Farbmittel F und G die Anstiegstemperatur der Spinnmasse von 165 °C (Kurve E) auf 150 °C (Kurve F) bzw. 149 °C (Kurve G) herabsetzen. Sie setzen die Anstiegstemperatur um 15 °C bzw. 16 °C herab. Die untersuchten Pigmente katalysieren also im Gegensatz zu den erfindungsgemäß eingesetzten Pigmenten den thermischen Abbau der Spinnmasse und sind deshalb als Farbstoff im Aminoxid-Cellulose-System nicht geeignet.

### Beispiel 3

Die mit Farbstoff A, B, C oder D versetzten Spinnmassen gemäß Beispiel 1 wurden bei 115 °C zu Fasern mit 1,7 dtex versponnen. Es wurden bei gutem Spinnverhalten zitronengelbe Fasern (Farbstoff A), ockergelbe Fasern (Farbstoff B), braune Fasern (Farbstoff C) und blaue Fasern (Farbstoff D) erhalten.

## Patentansprüche

1. Gefärbter cellulosischer Formkörper, **dadurch gekennzeichnet, daß** er ein Farbmittel auf Basis von Titanoxid oder Spinell (MgAl₂O₄) enthält, wobei das Titan teilweise bzw. das Magnesium teilweise oder ganz durch ein oder mehrere Schwermetall(e) ersetzt ist und wobei das Farbmittel gemäß dem oben beschriebenen Thermostabilitätstest die Anstiegstemperatur einer Lösung von Cellulose in einem tertiären Aminoxid um maximal 10 °C, insbesondere um maximal 5 °C, herabsetzt.

2. Gefärbter cellulosischer Formkörper nach Anspruch 1, **dadurch gekennzeichnet, daß** er das schwermetallhältige Farbmittel zu 0,20 bis 10 Masse%, vorzugsweise 2,0 bis 5,0 Masse%, bezogen auf die Cellulose, enthält.

3. Gefärbter cellulosischer Formkörper nach einem der Ansprüche 1 bis 2, **dadurch gekennzeichnet, daß** das(die) Schwermetall(e) aus der Gruppe bestehend aus Nickel, Chrom, Mangan, Antimon und Kobalt ausgewählt ist(sind).

4. Gefärbter cellulosischer Formkörper nach einem der Ansprüche 1 bis 3, **dadurch gekennzeichnet, daß** das(die) Schwermetall(e) in oxidischer Form vorliegt(vorliegen).

5. Gefärbter cellulosischer Formkörper nach Anspruch 4, **dadurch gekennzeichnet, daß** er ein Farbmittel auf Basis von Titanoxid enthält, wobei das Titanoxid teilweise durch Nickel(II)-oxid und Antimon(V)-oxid ersetzt ist.

6. Gefärbter cellulosischer Formkörper nach Anspruch 4, **dadurch gekennzeichnet, daß** er ein Farbmittel auf Basis von Titanoxid enthält, wobei das Titanoxid teilweise durch Chrom(III)-oxid und Antimon(V)-oxid ersetzt ist.

7. Gefärbter cellulosischer Formkörper nach Anspruch 4, **dadurch gekennzeichnet, daß** er ein Farbmittel auf Basis von Titanoxid enthält, wobei das Titanoxid teilweise durch Mangan(II)-oxid und Antimon(V)-oxid ersetzt ist.

8. Gefärbter cellulosischer Formkörper nach Anspruch 4, **dadurch gekennzeichnet, daß** er ein Farbmittel auf Basis von Spinell (MgAl₂O₄) enthält, wobei das Magnesium teilweise oder ganz durch Kobalt ersetzt ist.

9. Gefärbter cellulosischer Formkörper nach einem der Ansprüche 1 bis 8, **dadurch gekennzeichnet, daß** er eine Faser oder eine Folie ist.

10. Gefärbter cellulosischer Formkörper nach einem der Ansprüche 1 bis 9, **dadurch gekennzeichnet, daß** er durch ein Aminoxidverfahren hergestellt ist.

11. Verfahren zur Herstellung gefärbter cellulosischer Formkörper nach einem der Ansprüche 1 bis 10, bei dem eine Celluloselösung in einem wässerigen tertiären Aminoxid unter Verwendung eines Formwerkzeuges, insbesondere einer Spinndüse, geformt und über einen Luftspalt in ein Fällbad geführt wird, um die gelöste Cellulose auszufällen, wobei der Celluloselösung und/oder einem Vorläufer der Celluloselösung ein Farbmittel zugegeben wird, **dadurch gekennzeichnet, daß** ein schwermetallhältiges Farbmittel auf Basis von Titanoxid oder Spinell (MgAl₂O₄), wobei das Titan teilweise bzw. das Magnesium teilweise oder ganz durch ein oder mehrere Schwermetall(e) ersetzt ist, zugegeben wird, welches gemäß dem oben beschriebenen Thermostabilitätstest die Anstiegstemperatur der Lösung von Cellulose in dem tertiären Aminoxid um maximal 10 °C, insbesondere um maximal 5 °C, herabsetzt.

12. Verwendung eines schwermetallhältigen Farbmittels auf Basis von Titanoxid oder Spinell (MgAl₂O₄), wobei das Titan teilweise bzw. das Magnesium teilweise oder ganz durch ein oder mehrere Schwermetall(e) ersetzt ist, welches gemäß dem oben beschriebenen Thermostabilitätstest die Anstiegstemperatur einer Lösung von Cellulose in einem tertiären Aminoxid um maximal 10 °C, insbesondere um maximal 5 °C, herabsetzt, als Farbmittel für cellulosische Formkörper.

## Claims

1. A dyed cellulosic moulded body, **characterized in that** it contains a colorant on the basis of titanium oxide or spinelle (MgAl₂O₄), with the titanium being partially replaced by one or several heavy metals and the magnesium, respectively, being partially or completely replaced by one or several heavy metals and with the colorant reducing the rise temperature of a solution of cellulose in a tertiary amine oxide by 10°C at most, in particular by 5°C at most, in accordance with the thermal stability test described above.

2. A dyed cellulosic moulded body according to claim 1, **characterized in that** it contains the heavy-metal containing colorant by from 0.20 to 10% by mass, preferably by from 2.0 to 5.0% by mass, based on the cellulose.

3. A dyed cellulosic moulded body according to any of claims 1 to 2, **characterized in that** the heavy metal(s) is/are selected from the group consisting of nickel, chromium, manganese, antimony and cobalt.

4. A dyed cellulosic moulded body according to any of claims 1 to 3, **characterized in that** the heavy metal(s) is/are present in the oxidic form.

5. A dyed cellulosic moulded body according to claim 4, **characterized in that** it contains a colorant on the basis of titanium oxide, with the titanium oxide being partially replaced by nickel(II) oxide and antimony(V) oxide.

6. A dyed cellulosic moulded body according to claim 4, **characterized in that** it contains a colorant on the basis of titanium oxide, with the titanium oxide being partially replaced by chromium(III) oxide and antimony(V) oxide.

7. A dyed cellulosic moulded body according to claim 4, **characterized in that** it contains a colorant on the basis of titanium oxide, with the titanium oxide being partially replaced by manganese(II) oxide and antimony(V) oxide.

8. A dyed cellulosic moulded body according to claim 4, **characterized in that** it contains a colorant on the basis of spinelle (MgAl₂O₄), with the magnesium being partially or completely replaced by cobalt.

9. A dyed cellulosic moulded body according to any of claims 1 to 8, **characterized in that** it is a fibre or a film.

10. A dyed cellulosic moulded body according to any of claims 1 to 9, **characterized in that** it is produced by an amine-oxide process.

11. A process for producing dyed cellulosic moulded bodies according to any of claims 1 to 10, wherein a cellulose solution in an aqueous tertiary amine oxide is formed by means of a moulding tool, in particular a spinneret, and is conducted into a precipitation bath via an air gap in order to precipitate the dissolved cellulose, whereby a colorant is added to the cellulose solution and/or a precursor of the cellulose solution, **characterized in that** a heavy-metal containing colorant on the basis of titanium oxide or spinelle (MgAl₂O₄) is added, with the titanium being partially replaced by one or several heavy metals and the magnesium, respectively, being partially or completely replaced by one or several heavy metals, which colorant, according to the thermal stability test described above, reduces the rise temperature of the solution of cellulose in the tertiary amine oxide by 10°C at most, in particular by 5°C at most.

12. The use of a heavy-metal containing colorant on the basis of titanium oxide or spinelle (MgAl₂O₄) as a colorant for cellulosic moulded bodies, with the titanium being partially replaced by one or several heavy metals and the magnesium, respectively, being partially or completely replaced by one or several heavy metals, which colorant, according to the thermal stability test described above, reduces the rise temperature of a solution of cellulose in a tertiary amine oxide by 10°C at most, in particular by 5°C at most.

## Revendications

1. Corps moulé cellulosique coloré, **caractérisé en ce qu'**il contient une matière tinctoriale à base d'oxyde de titane ou de spinelle (MgAl₂O₄), le titane étant partiellement ou le magnésium étant partiellement ou totalement remplacé par un ou plusieurs métaux lourds et la matière tinctoriale abaissant la température ascendante d'une solution de cellulose dans un oxyde d'amine tertiaire de maximum 10 °C, en particulier de maximum 5 °C, conformément au test de thermostabilité décrit plus haut.

2. Corps moulé cellulosique coloré selon la revendication 1, **caractérisé en ce qu'**il contient la matière tinctoriale contenant un ou des métaux lourds, à raison de 0,20 à 10 % en masse, de préférence de 2,0 à 5,0 % en masse, par rapport à la cellulose.

3. Corps moulé cellulosique coloré selon l'une quelconque des revendications 1 à 2, **caractérisé en ce que** le ou les métaux lourds sont sélectionnés dans le groupe composé du nickel, du chrome, du manganèse, de l'antimoine et du cobalt.

4. Corps moulé cellulosique coloré selon l'une quelconque des revendications 1 à 3, **caractérisé en ce que** le ou les métaux lourds sont présents sous forme oxydique.

5. Corps moulé cellulosique coloré selon la revendication 4, **caractérisé en ce qu'**il contient une matière tinctoriale à base d'oxyde de titane, l'oxyde de titane étant partiellement remplacé par de l'oxyde de nickel(II) et de l'oxyde d'antimoine(V).

6. Corps moulé cellulosique coloré selon la revendication 4, **caractérisé en ce qu'**il contient une matière tinctoriale à base d'oxyde de titane, l'oxyde de titane étant partiellement remplacé par de l'oxyde de chrome(III) et de l'oxyde d'antimoine(V).

7. Corps moulé cellulosique coloré selon la revendication 4, **caractérisé en ce qu'**il contient une matière tinctoriale à base d'oxyde de titane, l'oxyde de titane étant partiellement remplacé par de l'oxyde de manganèse(II) et de l'oxyde d'antimoine(V).

8. Corps moulé cellulosique coloré selon la revendication 4, **caractérisé en ce qu'**il contient une matière tinctoriale à base de spinelle (MgAl₂O₄), le magnésium étant partiellement ou totalement remplacé par du cobalt.

9. Corps moulé cellulosique coloré selon l'une quelconque des revendications 1 à 8, **caractérisé en ce que** c'est une fibre ou une feuille.

10. Corps moulé cellulosique coloré selon l'une quelconque des revendications 1 à 9, **caractérisé en ce qu'**il est préparé au moyen d'un procédé à base d'oxyde d'amine.

11. Procédé de préparation du corps moulé cellulosique coloré selon l'une quelconque des revendications 1 à 10, dans lequel une solution de cellulose dans un oxyde d'amine tertiaire aqueux est moulée en utilisant un outil de moulage, en particulier une filière, et conduite par le biais d'un espace d'air dans un bain de précipitation pour précipiter la cellulose dissoute, la solution de cellulose et/ou un précurseur de la solution de cellulose étant additionné(e) d'une matière tinctoriale, **caractérisé en ce que** l'on ajoute une matière tinctoriale contenant un ou des métaux lourds, à base d'oxyde de titane ou de spinelle (MgAl₂O₄), le titane étant partiellement ou le magnésium étant partiellement ou totalement remplacé par un ou plusieurs métaux lourds, qui abaisse la température ascendante de la solution de cellulose dans l'oxyde d'amine tertiaire de maximum 10 °C, en particulier de maximum 5 °C, conformément au test de thermostabilité décrit plus haut.

12. Utilisation d'une matière tinctoriale contenant un ou des métaux lourds, à base d'oxyde de titane ou de spinelle (MgAl₂O₄), le titane étant partiellement ou le magnésium étant partiellement ou totalement remplacé par un ou plusieurs métaux lourds, qui abaisse la température ascendante de la solution de cellulose dans l'oxyde d'amine tertiaire de maximum 10 °C, en particulier de maximum 5 °C, conformément au test de thermostabilité décrit plus haut, comme matière tinctoriale pour des corps moulés cellulosiques.
